# EUROPEAN PATENT APPLICATION

(11) **EP 4 821 905 A1**
(43) Date of publication of application: **14.10.2026**
(21) Application number: 25169519.3
(22) Date of filing: 09.04.2025
(51) Int. Cl.: C04B 28/04, C04B 28/14, C04B 22/14, C04B 14/10, C04B 11/26, C04B 18/167

(54) **HYDRAULIC BINDER COMPOSITION**

(71) Applicant: Holcim Technology Ltd., 6300 Zug (CH)
(72) Inventor: TERMKHAJORNKIT, Pipat, 38070 Saint Quentin Fallavier (FR); HANDOUR, Mohamed-Amine, 38070 Saint-Quentin-Fallavier (FR); VERT, Clement, 38070 Saint-Quentin-Fallavier (FR); BARBARULO, Rémi, 38070 Saint-Quentin-Fallavier (FR)
(74) Representative: SONN Patentanwälte GmbH & Co KG

(57) **Abstract**

A hydraulic binder composition comprising, based on the dry weight of the binder:
- 60 to 84 wt.% of a calcined clay;
- 11 to 25 wt.% of calcium sulfate;
- 5 to 25 wt.% of Portland cement clinker; and optionally
- 0 to 24 wt.% of a secondary mineral component;
wherein the calcined clay has a metakaolin content of ≤ 27 wt.% and a total CaO content of ≥ 15 wt.%, based on the dry weight of the calcined clay.

## Description

Cement production is one of the most significant sources of anthropogenic carbon dioxide (CO₂) emissions, accounting for approximately 7-8% of global CO₂ emissions. This environmental impact stems primarily from two sources: the calcination of limestone (calcium carbonate) which releases CO₂ as a byproduct, and the energy-intensive nature of the production process which often relies on fossil fuels.

Low-carbon cements, aim to reduce the carbon footprint of cement production by altering the composition and manufacturing process, particularly by replacing portions of the clinker with other materials such as industrial byproducts, naturally occurring pozzolana, or calcined clays. One example is Limestone Calcined Clay Cement (LC3), a composite binder comprising clinker, calcined clay, limestone, and gypsum.

However, the practical implementation of low-carbon cement production based on calcined clay presents several significant challenges. The primary limitation is the requirement for the raw clay to have a high content of kaolinite, typically no less than 40%. Unfortunately, many naturally occurring clay deposits have kaolinite contents below this threshold, typically not exceeding 25%, making them unsuitable for conventional low-carbon cement production.

The requirement for high kaolinite content is directly tied to the cement's mechanical performance. Kaolinite has a layered silicate structure composed of alternating layers of tetrahedral silica sheets and octahedral alumina sheets. During calcination, kaolinite undergoes dehydroxylation and transforms into metakaolin, which is highly reactive in cementitious environments. This metakaolin reacts with calcium hydroxide produced during cement hydration to form calcium silicate hydrates, calcium aluminate hydrates, and calcium aluminate silicate hydrates - all important components for developing compressive strength.

Prior attempts to address this limitation include FR 3084665 B1, which proposes using clay with a kaolinite content of less than 25% but with significant muscovite and/or illite content of at least 20%. However, when such cementitious material is used in cement formulations where the Portland cement component is less than 70%, the mechanical performance of the resulting composite cement decreases significantly. This performance degradation has prevented the production of low-clinker cements with acceptable performance characteristics using such clay materials.

An objective of the present invention is to enable the production of a low-carbon cement that minimizes the clinker factor while achieving high compressive strength properties. The invention seeks to provide a hydraulic binder with CO₂ emissions of less than 350 kg/ton, preferably less than 300 kg/ton. Furthermore, the invention aims to achieve acceptable compressive strength values while maintaining a clinker content below 25%. An additional object is to enable the effective use of widely available clays having kaolinite content below 30%.

To solve this and other objects, the invention provides a hydraulic binder composition comprising, based on the dry wight of the binder:
- 60 to 84 wt.% of a calcined clay;
- 11 to 25 wt.% of calcium sulfate;
- 5 to 25 wt.% of Portland cement clinker; and optionally
- 0 to 24 wt.% of a secondary mineral component;
wherein the calcined clay has a metakaolin content of ≤ 27 wt.% and a total CaO content of ≥ 15 wt.%, based on the dry weight of the calcined clay.

As used herein, the weight percentages (wt.%) given for the calcined clay, the calcium sulfate, the Portland cement clinker, and the optional secondary mineral component are based on the total dry weight of the hydraulic binder composition.

As used herein the weight percentages (wt.%) given for the metakaolin content and the CaO content are based on the total dry weight of the calcined clay.

Preferably, the calcined clay is obtained by calcining a raw clay material having a kaolinite content of equal or less than 30 wt.%.

The invention is based on the surprising finding that when a calcined clay having a relatively low metakaolin content (equal or less than 27 wt.%) but high CaO content (equal or greater than 15 wt.%) is combined with specific amounts of calcium sulfate and Portland cement clinker, the resulting hydraulic binder achieves unexpectedly high strength development despite its low clinker content. This finding contradicts the conventional teaching in the field, which suggests that high kaolinite content (typically above 40 wt.%) is necessary for achieving adequate strength development in low-clinker cements.

The binder achieves a strength class of at least 32.5N, preferably at least 42.5N, while maintaining a clinker content below 25 wt.%, resulting in significantly reduced CO₂ emissions compared to conventional Portland cement. Furthermore, the invention enables the utilization of widely available clay deposits that were previously considered unsuitable for low-carbon cement production due to their low kaolinite content. This broadens the range of raw materials that can be used in sustainable cement production, making the technology more accessible and economically viable across different geographical regions.

The incorporation of 11 to 25 wt.% calcium sulfate, in combination with the high-CaO calcined clay, creates a synergistic effect that compensates for the reduced reactivity typically associated with low-kaolinite clays. This synergy enables the development of significant early strength, with the binder achieving substantial compressive strength values at both 2 and 7 days, while also ensuring excellent 28-day strength performance.

The term "clay" as used in the present invention is understood to encompass various types of argillaceous materials, including not only pure clay deposits but also marl and other similar materials containing clay minerals. These materials may naturally contain varying amounts of calcite, dolomite, quartz, feldspars, and other minerals commonly associated with clay deposits, in addition to clay minerals such as kaolinite, illite, smectite, and muscovite. Of particular relevance to the present invention are argillaceous materials having a relatively low kaolinite content but significant calcite content, such as marl, which upon calcination provides the desired CaO content in the calcined product.

Natural marl or marlstone is a carbonate-rich mud or mudstone which contains variable amounts of clays and silt. Naturally occurring marl/marlstone can have different mineralogical compositions, but for the purpose of the instant invention the marl/marlstone shall comprise ≤ 30 wt.-% kaolinite and ≥ 20 wt.-% calcite. In addition, natural marl or marlstone may preferably have a quartz content of 15-35 wt.-%.

Preferably, the raw clay material comprises calcite in an amount of 20 to 35 wt.%.

Preferably, the raw clay material has a kaolinite content of 10 to 30 wt.%, preferably 15 to 25 wt.%.

In one embodiment, the raw clay material comprises: 8 to 15 wt.% muscovite; 15 to 30 wt.% quartz; and 25 to 35 wt.% calcite.

Any content of kaolinite, illite, muscovite, and calcite or any other mineral phase indicated in wt.-% are measured by QXRD Rietveld method. Quantitative X-ray diffraction (XRD) measurements were made of powdered samples which were hand ground to pass a 63 µm sieve. A D8 Advance X-ray Diffractometer from Bruker was used which was operated using Cu Kα radiation at an acceleration voltage of 25 kV and a current of 40 mA, scanning at 2θ range of 3-65_{°}, with 4336 steps and a counting time of 0.135 s per step, rotation of the sample. The quantification of the phases was achieved by Rietveld refinement using Topas Academic v6 software.

The step of calcining the raw clay material is carried out in such a way as to obtain a pozzolanic material, i.e. a material with pozzolanic properties. Such material is characterized by having little or no cementitious value but which, in finely divided form and in the presence of water, reacts chemically with calcium hydroxide at ordinary temperatures to form compounds with cementitious properties.

According to a preferred embodiment of the invention, calcining the raw material is performed at a temperature of 700-900°C in order to obtain a pozzolanic material. The calcination at said temperature is carried out in order to have the kaolinite component of the raw clay material at least partially transform to metakaolin. Preferably, the calcination step is carried out so that at least 70 wt.-% of the kaolinite has completely transformed into metakaolin. Preferably, the calcination of the raw clay material should not be done at a temperature above 900°C as this would lead to the production of a dead-burnt material that has less pozzolanic reactivity. Preferably, the calcination step is carried out at a temperature of 700-900°C over a time period of few seconds up to 240 minutes, preferably at a temperature of 700-900°C over a time period of 15-180 minutes, even more preferably at a temperature of 700-900°C over a time period of 60-180 min.

The calcination step preferably results in that the calcined clay has an amorphous content of 35 to 45 wt.%.

Further, the calcined clay may preferably have a total CaO content of 15 to 30 wt.%, preferably 18 to 25 wt.%.

In a preferred embodiment, the calcined clay has a chemical composition comprising the following compounds:

| | |
|---|---|
| SiO₂ | 40 - 60 wt.-% |
| Al₂O₃ | 10 - 20 wt.-% |
| Fe₂O₃ | 2 - 6 wt.-% |
| CaO | 15 - 30 wt.-% |

the rest comprising LOI (loss on ignition) and compounds including MgO, K₂O, Na₂O, SO₃, TiO₂, Mn₂O₃, P₂O₅, Cr₂O₃, ZrO₂ and SrO.

The chemical composition was measured by X-ray Fluorescence (XRF).

The invention allows reducing the clinker factor to 25 or below. Preferably, the Portland cement clinker is present in an amount of 10 to 20 wt.%. Preferably, the calcined clay is present in an amount of 65 to 75 wt.%.

In a preferred embodiment of the invention, the calcium sulfate component is selected from the group consisting of anhydrite, gypsum, hemihydrate, and combinations thereof. When combined with the calcined clay having high CaO content and the Portland cement clinker, these calcium sulfate sources contribute to optimized setting behavior and strength development of the binder. Particularly advantageous results are achieved with anhydrite, which, in combination with the high-CaO calcined clay, enables the achievement of compressive strengths exceeding 45 MPa at 28 days, even with clinker contents as low as 15 wt.%.

Preferably, the calcium sulfate may be obtained by subjecting a waste plasterboard material to a calcination step. In particular, a waste plasterboard material may be co-calcined with the raw clay material in the same calcination installation. The waste plasterboard material may be in the form of plasterboard particles obtained by comminuting plasterboards or a gypsum fraction thereof. Calcining the water plasterboard particles removes or substantially reduces the content of organic additives contained in plasterboard in order to reduce the influence of varying amounts of such additives on the cement quality.

In a preferred embodiment of the invention, the calcined clay has a D50 particle size of 5 to 25 µm, more preferably 5 to 15 µm. This specific particle size range has been found to provide an optimal balance between reactivity and processing characteristics of the hydraulic binder. When the calcined clay is ground to achieve this particle size distribution, it exhibits enhanced reactivity in the cementitious system, contributing to improved strength development. Particularly advantageous results are observed within the preferred range of 5 to 15 µm, where the particle size is fine enough to ensure adequate surface area for reactions while avoiding the increased water demand and processing challenges associated with ultra-fine particles.

The D50 corresponds to the 50th centile of the volume distribution of particle sizes, i.e. 50% of the volume consists of particles for which the size is less than the measured value. The D50 of particles is generally determined by laser diffraction. The particle size distribution of the different powders are obtained with a laser Malvern MS2000 granulometer. The measurement is carried out in a suitable medium (for example, in an aqueous medium); the size of the particles should be comprised between 0.02 µm and 2 mm. The light source consists of a red He-Ne laser (632 nm) and a blue diode (466 nm). The optical model is the Fraunhofer one, the computation matrix is of the polydisperse type.

A measurement of background noise is first of all carried out with a pump rate of 2,000 rpm, a stirring rate of 800 rpm and a measurement of noise over 10 s, in the absence of ultrasonic waves. It is then checked that the light intensity of the laser is at least equal to 80%, and that a decreasing exponential curve is obtained for the background noise. If this is not the case, the lenses of the cell have to be cleaned. A first measurement is then carried out on the sample with the following parameters: pump rate of 2,000 rpm, stirring rate of 800 rpm, absence of ultrasonic waves, obscuration limit between 10 and 20%. The sample is introduced in order to have an obscuration slightly greater than 10%. After stabilization of the obscuration, the measurement is carried out with a duration between the immersion and the measurement set to 10 s. The measurement duration is of 30 s (30,000 analyzed diffraction images). In the obtained granulogram, the fact that a portion of the population of the powder may be agglomerated should be taken into account.

Next, a second measurement (without emptying the tank) is carried out with ultrasonic waves. The pump rate is brought to 2,500 rpm, the stirring to 1,000 rpm, the ultrasonic waves are 100 % emitted (30 Watts). This rate is maintained for 3 minutes, and then one returns to the initial parameters: pump rate 2,000 rpm, stirrer rate of 800 rpm, absence of ultrasonic waves. After 10 s (for removing the possible air bubbles), a measurement is made for 30 s (30,000 analyzed images). This second measurement corresponds to a powder deagglomerated by ultrasonic dispersion. Each measurement is repeated least twice in order to check the stability of the result. The apparatus is calibrated before each working session by means of a standard sample (silica C10 Sifraco) the grain size curve of which is known. All the measurements shown in the description and the announced ranges correspond to the values obtained with ultrasonic waves.

The hydraulic binder composition of the invention may optionally contain additional components, in particular a secondary mineral component in a range of 0 to 24 wt.% based on the total weight of the hydraulic binder composition. For example, the secondary mineral component may be present in an amount of 1-8 wt.% based on the total weight of the hydraulic binder composition. The secondary mineral component may comprise one or more materials selected from the group consisting of ground granulated blast furnace slag (GGBFS), fly ash, silica fume, rice husk ash, burnt shale, limestone, dolomite, quartz, volcanic ash, trass, construction demolition materials (CDM), recycled concrete fines (RCF), natural pozzolans, artificial pozzolans, ground waste glass, steel slag, bauxite residue, red mud, ceramic waste, and combinations thereof. As used herein, the secondary mineral component does not include calcined clay.

As mentioned before, the binder achieves a 28-day compressive strength of at least 32.5 MPa, preferably at least 38 MPa, more preferably at least 42.5 MPa. The compressive strength values reported herein are determined according to the European standard EN 196-1. According to this standard, mortar specimens are prepared with a cement to standard sand ratio of 1:3 and a water to cement ratio of 0.50. The mortar is mixed under standardized conditions and cast into prismatic molds measuring 40 x 40 x 160 mm. The specimens are stored at 20 ± 1°C and relative humidity of at least 90% for the first 24 hours. After demolding, the specimens are stored under water at 20 ± 1°C until testing. For compressive strength testing, the prisms are first broken into two halves by three-point flexural loading. The resulting halves are then tested for compressive strength using a loading rate of 2400 ± 200 N/s, applied across a test area of 40 x 40 mm. The reported compressive strength values represent the arithmetic mean of six determinations obtained from testing three prismatic specimens.

According to a second aspect, the invention provides a method of producing a hydraulic binder composition, comprising
- providing a raw clay material having a kaolinite content of ≤ 30 wt.%;
- calcining the raw clay material to obtain a calcined clay having a total CaO content of ≥ 15 wt.%;
- mixing 60 to 84 wt.% of the calcined clay, 11 to 25 wt.% of calcium sulfate, 5 to 25 wt.% of Portland cement clinker, and optionally 0 to 24 wt.% of a secondary mineral component.

Several prior art methods may be used for calcining the raw material, with the choice of the method being determined by factors such as the scale of production, the specific nature of the raw materials, and the desired characteristics of the final product.

According to one alternative a rotary kiln calcination is carried out. This involves feeding the raw material into a rotating cylindrical furnace, where it is heated to the desired temperature range of 700-900°C. The rotation of the kiln ensures thorough mixing and even heating of the material, promoting consistent and efficient decarbonation of the calcium oxide source, such as limestone, and dehydroxylation of the clay minerals.

Alternatively, a vertical shaft kiln may be used for calcination. The raw material is loaded at the top of a tall, vertical furnace and heated as it descends through the kiln, undergoing the necessary chemical transformations.

Alternatively, a fluidized bed calcination may be used, which is a method wherein the raw material is suspended in a rising flow of hot gas. This ensures very high heat and mass transfer rates, providing rapid, uniform calcination.

In a preferred embodiment, the method further comprises grinding the raw clay material or the calcined clay. Grinding the raw clay material before calcination can lead to more uniform heat treatment during the calcination process due to the homogeneous particle size distribution, potentially resulting in more consistent reactivity of the calcined product. Alternatively, grinding the material after calcination has been found to be particularly effective as the calcined material is typically more brittle and thus requires less energy for size reduction. Moreover, post-calcination grinding ensures precise control over the final particle size distribution of the reactive component,

As mentioned before, grinding the raw clay material or the calcined clay preferably comprises grinding to a D50 particle size of 5 to 25 µm.

Preferably, grinding the raw clay material or the calcined clay comprises grinding to achieve a BET surface area of 2 to 8 cm²/g. The BET specific surface area is measured according to the standard ISO 9277:2010.

In a preferred embodiment of the method, a superplasticizer is added during the mixing step. The addition of a superplasticizer, particularly in an amount of 0.1 to 0.2 wt.% dry matter based on the weight of the binder, helps to effectively disperse the fine particles of the calcined clay and other components, preventing agglomeration and ensuring homogeneous distribution throughout the mixture. In preferred embodiments of the invention, the superplasticizer is selected from polycarboxylate ether-based (PCE) superplasticizers.

### EXAMPLES

In the following, the invention will be described in more detail with reference to the following examples.

### Raw materials

In the examples, the following raw materials were used.

### Portland cement

| | |
|---|---|
| Name | CEM I SPLC 52.5 N |
| Supplier | Holcim |
| Density (g/cm³) | 3.13 |
| Blaine surface area (cm²/g) | 3880 |
| D10 (µm) | 2.90 |
| D50 (µm) | 14.68 |
| D90(µm) | 38.22 |

| Composition | |
|---|---|
| LOI 950°C (%) | 1.65 |
| SiO₂ (%) | 20.16 |
| Al₂O₃ (%) | 4.81 |
| Fe₂O₃ (%) | 3.05 |
| CaO (%) | 64.46 |
| MgO (%) | 1.14 |
| K₂O (%) | 0.79 |
| Na₂O (%) | 0.21 |
| SO₃ (%) | 3.21 |
| TiO₂ (%) | 0.26 |
| Mn₂O₃ (%) | 0.11 |
| P₂O₅ (%) | 0.18 |
| Cr₂O₃ (%) | <0.05 |
| ZrO₂ (%) | <0.05 |
| SrO (%) | <0.05 |
| Total (%) | 100.1 |

### Calcium sulfate, Limestone

| | Anhydrite | Gypsum | Limestone (BL200) |
|---|---|---|---|
| Supplier | Anhydrite Minerale France | Saint Gobain | Omya |
| Density (g/cm³) | 2.93 | 2.35 | 2.72 |
| Blaine surface area (cm²/g) | 4730 | 3560 | 3995 |
| D10 (µm) | 3.26 | 5.25 | 2.7 |
| D50 (µm) | 13.55 | 24.65 | 8.3 |
| D90 (µm) | 42.29 | 58.87 | 29.3 |

### Raw clay

| | Clay (reference, wt.%) | Clay (invention, wt.%) |
|---|---|---|
| Montmorillonite | 0 | 0 |
| Muscovite 2M1 | 6.2 | 7.1 |
| Muscovite 2M2 | 1.3 | 6.8 |
| Chlorite IIb | 1.4 | 1 |
| Kaolinite | 42.2 | 19.8 |
| Quartz | 46.4 | 20.8 |
| Albite | | 0.3 |
| Microcline | | 2 |
| Hematite | | 0.2 |
| Anatase | | 0.3 |
| Calcite | 0 | 29.8 |
| Dolomite | 0 | 2.3 |
| Pyrite | | 0.9 |
| Alunite | | 0.1 |
| Illite modified | | 4.4 |
| Illite-smectite | | 1.5 |
| Siderite | | 0.4 |
| Oligoclase An25 | | 0 |
| Sanidine Na0.56 | | 2.2 |

The raw clay was calcined at 800 °C for 45 minutes....

### Clay after calcination (chemical composition)

| Name | Calcined clay (invention) | Calcined clay (reference) |
|---|---|---|
| LOI 950°C (%) | 2,86 | 1, 07 |
| SiO₂ (%) | 50, 07 | 73, 62 |
| Al₂O₃ (%) | 14, 8 | 21, 81 |
| Fe₂O₃ (%) | 4, 32 | 0, 87 |
| CaO (%) | 20, 8 | 0, 66 |
| MgO (%) | 1, 9 | 0, 11 |
| K₂O (%) | 2, 7 | 1, 34 |
| Na₂O (%) | 0, 14 | <0.05 |
| SO₃ (%) | 1, 52 | <0.05 |
| TiO₂ (%) | 0, 68 | 0,38 |
| Mn₂O₃ (%) | <0.05 | <0.05 |
| P₂O₅ (%) | 0, 09 | <0.05 |
| Cr₂O₃ (%) | <0.05 | <0.05 |
| ZrO₂ (%) | <0.05 | <0.05 |
| SrO (%) | 0, 06 | <0.05 |
| Total (%) | 100 | 100 |

### Clay after calcination (mineralogical composition)

| | Calcined clay (invention) (wt.%) | Calcined clay (reference) (wt.%) |
|---|---|---|
| Amorphous | 39,8 | 46,9 |
| STD Corundum ICSD 68591 | 0,0 | 0,0 |
| SI-Quartz ICSD 174 | 23,9 | 43,5 |
| Si-Mullite 2:1 | 0,0 | 0,0 |
| SI-Mullite 3:2 | 0,0 | 0,0 |
| MC-Biotite 1M ICSD 68928 | 0,1 | 0,2 |
| MC-Chlorite ICSD 43627 | 0,0 | 0,0 |
| MC-Clinochlore (IIb-4) ICSD 84262 | 0,0 | 0,0 |
| MC-Muscovite 2M1 | 0,0 | 0,2 |
| MC-Muscovite dehydroxylated | 4,2 | 4,8 |
| MC-Talc 2M ICSD 26741 | 0,0 | 0,0 |
| CL-Illite 2M1 ICSD 90144 | 0,0 | 0,0 |
| CL-Illite-smectite ICSD 166967 | 0,0 | 0,0 |
| CL-Kaolinite 1A ICSD 63192 | 0,0 | 0,1 |
| CL-Montmorillonite ICSD 161171 | 0,0 | 0,0 |
| CL-Nontronite ICSD 86916 | 0,0 | 0,0 |
| CL-Palygorskite ICSD 97694 | 0,0 | 0,0 |
| CL-Sepiolite ICSD 156199 | 0,0 | 0,0 |
| CL-Vermiculite 2M ICSD 27644 | 0,0 | 0,0 |
| FA-Anorthoclase (K0.14) ICSD 31184 | 0,0 | 0,0 |
| FA-Anorthoclase (K0.25) ICSD 31182 | 0,0 | 0,0 |
| FA-Microcline ICSD 83531 | 5,9 | 0,0 |
| FA-Orthoclase ICSD 81135 | 0,0 | 0,0 |
| FA-Sanidine (K0.41) ICSD 39748 | 0,0 | 0,7 |
| FA-Sanidine (K0.65) ICSD 100557 | 0,0 | 0,0 |
| FA-Sanidine (K0.86) ICSD 9583 | 0,0 | 0,0 |
| FP-Albite (Na1.00) ICSD 63191 | 0,0 | 0,0 |
| FP-Andesine (Ca0.50) ICSD 66127 | 0,0 | 0,0 |
| FP-Anorthite (Ca1.00) ICSD 23922 | 0,0 | 0,0 |
| FP-Bytownite (Ca0.85) ICSD 30933 | 0,0 | 0,0 |
| FP-Labradorite (Ca0.55) ICSD 9287 | 0,0 | 0,0 |
| FP-Labradorite (Ca0.66) ICSD34943 | 0,0 | 0,0 |
| FP-Oligoclase (Ca0.25) ICSD 34916 | 2,2 | 0,0 |
| FI-Leucite ICSD 9826 | 0,0 | 0,0 |
| FI-Nepheline ICSD 27584 | 0,0 | 0,0 |
| FI-Sodalite ICSD 71432 | 0,0 | 0,0 |
| OX-Anatase | 0,0 | 0,2 |
| OX-Rutile | 0,0 | 0,0 |
| OX-Goethite | 0,0 | 0,0 |
| OX-Hematite ICSD 82904 | 1,5 | 0,0 |
| OX-Ilmenite ICSD 30664 | 0,0 | 0,0 |
| OX-Maghemite | 0,0 | 0,0 |
| OX-Magnetite Bruker | 0,0 | 0,0 |
| OX-Periclase | 1,3 | 0,0 |
| OX-Lime ICSD 75785 | 0,0 | 0,0 |
| Portlandite | 3,0 | 0,0 |
| CA-Ankerite ICSD 203097 | 0,0 | 0,0 |
| CA-Calcite ICSD 79673 | 3,9 | 0,0 |
| CA-Dolomite ICSD 87088 | 0,0 | 0,0 |
| CA-Magnesite ICSD 73731 | 0,0 | 0,0 |
| G-Anhydrite ICSD 40043 | 1,5 | 0,6 |
| G-Bassanite ICSD 69060 | 0,0 | 0,0 |
| G-Gypsum ICSD 2059 | 0,0 | 0,0 |
| AM-Actinolite | 0,0 | 0,0 |
| ZE-Analcime (Na) ICSD 2930 | 0,0 | 0,0 |
| ZE-Chabazite (Ca) ICSD 100386 | 0,0 | 0,0 |
| ZE-Chabazite (Na) ICSD 201464 | 0,0 | 0,0 |
| ZE-Faujasite (K) ICSD 68635 | 0,0 | 0,0 |
| ZE-Heulandite (Ca) ICSD 25029 | 0,0 | 0,0 |
| ZE-Phillipsite (Na.K) ICSD 23902 | 0,0 | 0,0 |
| ZE-Stilbite (Na.Ca) ICSD 9094 | 0,0 | 0,0 |
| Akermanite | 0,0 | 0,0 |
| C2AS Gehlenite | 2,1 | 0,0 |
| Merwinite | 2,7 | 0,0 |
| Perowskite | 0,0 | 0,0 |
| Titanite | 0,0 | 0,0 |
| Wollastonite 1T | 1,7 | 0,7 |
| Wollastonite 2M | 0,0 | 0,0 |
| Cordierite | 0,0 | 0,0 |
| Epidote | 0,0 | 0,0 |
| C2S alpha | 0,9 | 0,2 |
| C2S alpha'H | 1,4 | 0,0 |
| C2S_beta | 3,9 | 1,3 |
| C3A_cubic | 0,0 | 0,0 |
| C3A orthorhombic | 0,0 | 0,0 |
| C4AF-A | 0,0 | 0,0 |
| C4AF-B | 0,0 | 0,0 |
| PbO alpha Lithargite | 0,0 | 0,0 |
| PbO beta Massicotite | 0,0 | 0,0 |
| CA-Dolomite_Bruker | 0,0 | 0,0 |
| Iron Silicide cubic | 0,0 | 0,7 |
| C3S monoclinic (NISHI) | 0,0 | 0,0 |
| Rwp (weighed profile R value) | 7,4 | 10,5 |

The amorphous composition was calculated from the oxides obtained by XRF, and subtracting the oxide in crystals obtained from by XRD.

| Amorphous composition | Calcined clay (invention) | Calcined clay (reference) |
|---|---|---|
| CaO* | 8.5 | 0 |
| SiO2* | 15.73 | 26.46 |
| Al2O3* | 9.62 | 19.74 |

| | | |
|---|---|---|
| *Reactive oxide: reactive oxide is the oxide from amorphous, clicker phases, free lime, Portlandite and anhydrite. | | |

| | Calcined clay (invention) | Calcined clay (reference) |
|---|---|---|
| Reactive CaO | 15.46 (14.83*) | 0.32 (0.07*) |
| Reactive SiO₂ | 17.9 | 26.97 |
| Reactive Al₂O₃ | 9.62 | 19.74 |
| Reactive SO₃ | 0.91 | 0.35 |
| Total | 43.89 | 47.38 |
| Total* | 43.26 | 47.13 |

### Particle size distribution

| | Calcined clay (invention) | | |
|---|---|---|---|
| | D50=21µm | D50=10µm | D50=6µm |
| D10 (µm) | 3 | 2.04 | 1.39 |
| D50 (µm) | 21.5 | 10.22 | 6.21 |
| D90 (µm) | 77.9 | 31.7 | 32.56 |
| Density (g/cm³) | 2.73 | 2.73 | 2.73 |
| BET (cm²/g) | 3.9 | 4.25 | 5.45 |

| | Calcined clay (reference) | |
|---|---|---|
| | D50= 18 µm | D50=12µm |
| D10 (µm) | 3.67 | 2.55 |
| D50 (µm) | 18.26 | 12.39 |
| D90 (µm) | 62.41 | 45.85 |
| Density (g/cm³) | 2.63 | 2.63 |
| BET (cm²/g) | 5.6 | 10.5 |

### Superplasticizer

| | |
|---|---|
| Name | Unycryl PCX 50 WM |
| Supplier | Cromogenia |
| Dry matter (%) | 50% |

The dosage of superplasticizer corresponds to 0.15% dry matter to the weight of binder.

Input CO₂ values for calculation of CO₂ emissions of the binders

| | CO₂ emission (kg/ton) |
|---|---|
| CEM I SPLC 52.5 N | 701 |
| CaO | 886 |
| Anhydrite | 73 |
| Gypsum | 73 |
| Limestone | 30 |
| Calcined clay (invention) | 200 |
| Calcined clay (reference) | 30 |

### Example 1, for benchmarking purpose (comparative)

### Composition 1-001:

| | |
|---|---|
| • Calcined clay (invention), D50=10µm: | 85 wt.% |
| • Anhydrite: | 0 wt.% |
| • CEM I SPLC 52.5 N: | 15 wt.% |

### Composition 1-002:

| | |
|---|---|
| • Calcined clay (invention), D50=10µm: | 85 wt.% |
| • Anhydrite: | 15 wt.% |
| • CEM I SPLC 52.5 N: | 0 wt.% |

### Composition 1-003:

| | |
|---|---|
| • Calcined clay (invention), D50=10µm: | 70 wt.% |
| • Anhydrite | 15 wt.% |
| • CaO: | 15 wt.% |

Performance of the above compositions (compressive strength and CO₂ footprint):

| N° | | Cs2d (MPa) | Cs7d (MPa) | Cs28d (MPa) | CO₂ (kg/ton) |
|---|---|---|---|---|---|
| 1-001 | | 1.54 | 21.47 | 30.67 | 275 |
| 1-002 | | 5.06 | 8.59 | 14.07 | 181 |
| 1-003 | | 1.89 | 9.92 | 16.96 | 284 |

### Findings:

- The compressive strength at 28 days of compositions N° 1-001 to 1-003 are lower than 32.5 MPa.
- The combination of calcined clay (marl stone) and anhydrite, or calcined clay (marl stone) with low amount of Portland clinker or the combination calcined clay (marl stone), anhydrite and free lime does not deliver the desired results.
- It has to be noted that composition N° 1-003 using free lime (calcium oxide) does not reach the desired strength when using low grade calcined clay.

### Example 2, according to the invention

### Composition 2-001:

| | |
|---|---|
| • Calcined clay (invention), D50=10µm: | 70 wt.% |
| • Anhydrite: | 15 wt.% |
| • CEM I SPLC 52.5 N: | 15 wt.% |

### Composition 2-002:

| | |
|---|---|
| • Calcined clay (invention), D50=10µm: | 65 wt.% |
| • Anhydrite: | 15 wt.% |
| • CEM I SPLC 52.5 N: | 20 wt.% |

### Composition 2-003:

| | |
|---|---|
| • Calcined clay (invention), D50=10µm: | 60 wt.% |
| • Anhydrite: | 15 wt.% |
| • CEM I SPLC 52.5 N: | 25 wt.% |

Performance of the above compositions (compressive strength and CO₂ footprint):

| N° | Cs2d (MPa) | Cs7d (MPa) | Cs28d (MPa) | CO₂ (kg/ton) |
|---|---|---|---|---|
| 2-001 | 6.54 | 38.18 | 47.50 | 256 |
| 2-002 | 8.06 | 43.33 | 51.75 | 281 |
| 2-003 | 7.70 | 39.56 | 53.51 | 306 |

### Findings:

- The compositions according to the invention (2-001 to 2-003) all achieve compressive strengths significantly exceeding 32.5 MPa and even exceeding 42.5 MPa at 28 days, ranging from 47.50 to 53.51 MPa.
- Even with only 15% CEM I content (composition 2-001), the binder achieves excellent strength development (47.50 MPa at 28 days) while maintaining a low CO₂ footprint of 256 kg/ton.
- Increasing the CEM I content from 15% to 25% (compositions 2-001 to 2-003) results in moderate strength improvements but also increases the CO₂ footprint.
- All compositions show good early strength development, with 7-day strengths ranging from 38.18 to 43.33 MPa.

### Example 3, according to invention with varying particle size

### Composition 3-001:

| | |
|---|---|
| • Calcined clay (invention), D50=21µm: | 70 wt.% |
| • Anhydrite: | 15 wt.% |
| • CEM I SPLC 52.5 N: | 15 wt.% |

### Composition 3-002:

| | |
|---|---|
| • Calcined clay (invention), D50=21µm: | 65 wt.% |
| • Anhydrite: | 15 wt.% |
| • CEM I SPLC 52.5 N: | 20 wt.% |

### Composition 3-003:

| | |
|---|---|
| • Calcined clay (invention), D50=6µm: | 70 wt.% |
| • Anhydrite: | 15 wt.% |
| • CEM I SPLC 52.5 N: | 15 wt.% |

Performance of the above compositions (compressive strength and CO₂ footprint):

| N° | Cs2d (MPa) | Cs7d (MPa) | Cs28d (MPa) | CO₂ (kg/ton) |
|---|---|---|---|---|
| 3-001 | 4.67 | 29.94 | 43.03 | 256 |
| 3-002 | 5.62 | 29.45 | 42.50 | 256 |
| 3-003 | 17.89 | 38.92 | 48.59 | 256 |

### Findings:

- The particle size of the calcined clay influences strength development.
- With coarser calcined clay (D50=21µm, compositions 3-001 and 3-002), the compositions still achieve the target strength of 32.5 MPa and even 42.5 MPa at 28 days, but with lower early strength development.
- Finer particle size (D50=6µm, composition 3-003) results in substantially improved early strength (17.89 MPa at 2 days) and higher 28-day strength (48.59 MPa).
- All compositions maintain the same low CO₂ footprint of 256 kg/ton, demonstrating that particle size optimization can improve performance without environmental impact.

### Example 4

### Composition 4-001:

| | |
|---|---|
| • Calcined clay (invention), D50=10µm: | 70 wt.% |
| • Gypsum: | 15 wt.% |
| • CEM I SPLC 52.5 N: | 15 wt.% |

### Composition 4-002:

| | |
|---|---|
| • Calcined clay (invention), D50=10µm: | 65 wt.% |
| • Anhydrite: | 20 wt.% |
| • CEM I SPLC 52.5 N: | 15 wt.% |

### Composition 4-003:

| | |
|---|---|
| • Calcined clay (invention), D50=10µm: | 65 wt.% |
| • Anhydrite: | 15 wt.% |
| • CEM I SPLC 52.5 N: | 15 wt.% |
| • Limestone BL200: | 5 wt.% |

Performance of the above compositions (compressive strength and CO₂ footprint):

| N° | Cs2d (MPa) | Cs7d (MPa) | Cs28d (MPa) | CO₂ (kg/ton) |
|---|---|---|---|---|
| 4-001 | 5.25 | 31.88 | 40.42 | 256 |
| 4-002 | 6.39 | 33.18 | 48.96 | 250 |
| 4-003 | 5.67 | 32.35 | 46.60 | 248 |

### Findings:

- Different forms of calcium sulfate and the addition of limestone affect performance while maintaining low CO₂ emissions.
- Using gypsum instead of anhydrite (4-001) results in slightly lower strength development but still achieves satisfactory strength levels.
- Increasing the anhydrite content to 20% (4-002) improves strength development to 48.96 MPa while reducing CO₂ emissions to 250 kg/ton.
- The addition of 5% limestone (4-003) maintains good strength development (46.60 MPa) while achieving the lowest CO₂ emissions (248 kg/ton).

### Example 5 (Comparative examples using clay having high kaolinite content)

### Composition 5-001:

| | |
|---|---|
| • Calcined clay (reference), D50=12µm: | 70 wt.% |
| • Anhydrite: | 15 wt.% |
| • CEM I SPLC 52.5 N: | 15 wt.% |

### Composition 5-002:

| | |
|---|---|
| • Calcined clay (reference), D50=18µm: | 70 wt.% |
| • Anhydrite: | 15 wt.% |
| • CEM I SPLC 52.5 N: | 15 wt.% |

| N° | Cs2d (MPa) | Cs7d (MPa) | Cs28d (MPa) | CO₂ (kg/ton) |
|---|---|---|---|---|
| 5-001 | 13.17 | 18.76 | 22.09 | 137 |
| 5-002 | 1.82 | 4.35 | 5.74 | 137 |

### Findings:

- Using calcined clay with high kaolinite content (reference clay) results in significantly lower strength development despite identical mix proportions.
- Even with finer particle size (D50=12µm, composition 5-001), the 28-day strength only reaches 22.09 MPa.
- Coarser particle size (D50=18µm, composition 5-002) results in very poor strength development.
- These results demonstrate that high kaolinite content does not guarantee better performance in this binder system, contrary to conventional wisdom in the field.

## Claims

1. A hydraulic binder composition comprising, based on the dry weight of the binder:
- 60 to 84 wt.% of a calcined clay;
- 11 to 25 wt.% of calcium sulfate;
- 5 to 25 wt.% of Portland cement clinker; and optionally
- 0 to 24 wt.% of a secondary mineral component;
wherein the calcined clay has a metakaolin content of ≤ 27 wt.% and a total CaO content of ≥ 15 wt.%, based on the dry weight of the calcined clay.

2. The hydraulic binder composition according to claim 1, wherein the calcined clay is obtained by calcining a raw clay material having a kaolinite content of ≤ 30 wt.%, preferably 10 to 30 wt.%, in particular 15 to 25 wt.%.

3. The hydraulic binder composition according to claim 1 or 2, wherein the calcined clay is present in an amount of 65 to 75 wt.%, based on the dry weight of the binder.

4. The hydraulic binder composition according to claim 1, 2 or 3, wherein the Portland cement clinker is present in an amount of 10 to 20 wt.%, based on the dry weight of the binder.

5. The hydraulic binder composition according to any one of claims 1 to 4, wherein the calcium sulfate is selected from the group consisting of anhydrite, gypsum, hemihydrate, and combinations thereof.

6. The hydraulic binder composition according to any one of claims 1 to 5, wherein the calcined clay has a total CaO content of 15 to 30 wt.%, preferably 18 to 25 wt.%.

7. The hydraulic binder composition according to any one of claims 1 to 6, wherein the calcined clay has a D50 particle size of 5 to 25 µm, preferably 5 to 15 µm.

8. The hydraulic binder composition according to any one of claims 1 to 7, wherein the binder when tested according to EN 196-1 achieves a 28-day compressive strength of at least 32.5 MPa, preferably at least 38 MPa, more preferably at least 42.5 MPa.

9. The hydraulic binder composition according to any one of claims 1 to 8, wherein the calcined clay comprises: 15 to 20 wt.% reactive SiO₂; 9 to 11 wt.% reactive Al₂O₃; and preferably 0.5 to 1.5 wt.% reactive SO₃.

10. The hydraulic binder composition according to any one of claims 1 to 9, wherein the calcined clay has an amorphous content of 35 to 45 wt.%.

11. The hydraulic binder composition according to any one of claims 2 to 10, wherein the raw clay material comprises: 8 to 15 wt.% muscovite; 15 to 30 wt.% quartz; and 25 to 35 wt.% calcite.

12. A method of producing a hydraulic binder composition, comprising
- providing a raw clay material having a kaolinite content of ≤ 30 wt.%;
- calcining the raw clay material to obtain a calcined clay having a total CaO content of ≥ 15 wt.%;
- mixing 60 to 84 wt.% of the calcined clay, 11 to 25 wt.% of calcium sulfate, 5 to 25 wt.% of Portland cement clinker, and optionally 0 to 24 wt.% of a secondary mineral component.

13. The method according to claim 12, further comprising grinding the raw clay material or the calcined clay.

14. The method according to claim 13, wherein grinding the raw clay material or the calcined clay comprises grinding to a D50 particle size of 5 to 25 µm, preferably 5 to 15 µm.

15. The method according to any one of claims 12 to 14, wherein grinding the raw clay material or the calcined clay comprises grinding to achieve a BET surface area of 2 to 8 cm²/g.

16. The method according to any one of claims 12 to 15, wherein the calcium sulfate is selected from the group consisting of anhydrite, gypsum, hemihydrate, and combinations thereof.

17. The method according to any one of claims 12 to 16, further comprising adding a superplasticizer during the mixing step.

18. The method according to any one of claims 12 to 17, wherein the calcium sulfate is obtained by subjecting a waste plasterboard material to a calcination step, wherein said calcination step is preferably carried out by adding said waste plasterboard material to the step of calcining the raw clay material.
